# EUROPÄISCHE PATENTSCHRIFT

(11) **EP 2 620 685 B1**
(45) Veröffentlichungstag und Bekanntmachung des Hinweises auf die Patenterteilung: **12.03.2014**
(21) Anmeldenummer: 13000302.3
(22) Anmeldetag: 22.01.2013
(51) Int. Cl.: F16L 21/02, F16L 21/00, F16L 25/14

(54) **Vorrichtung zum Verbinden von zwei unterschiedliche Außendurchmesser aufweisende Rundlingen**
Device for connecting round parts with two different external diameters
Dispositif destiné à relier deux rondins présentant différents diamètres extérieurs

(30) Priorität: 24.01.2012 DE 102012001181; 07.02.2012 DE 102012002196
(43) Veröffentlichungstag der Anmeldung: 31.07.2013
(73) Patentinhaber: Felber, Winfried, 86653 Monheim (DE)
(72) Erfinder: Felber, Winfried, 86653 Monheim (DE)
(74) Vertreter: Munk, Ludwig

(56) Entgegenhaltungen:
- EP-B1- 2 072 877
- WO-A2-2011/091135
- DE-A1-102007 010 342
- DE-C- 112 634
- US-A- 813 033
- US-A- 4 186 948

## Beschreibung

Die Erfindung betrifft eine Vorrichtung von zwei unterschiedliche Außendurchmesser aufweisenden Rundlingen, insbesondere Rohren.

Aus der DE 10 2007 010 342 A1 ist eine Vorrichtung zum Verbinden von zwei Rohren bekannt, wobei eine die Stoßstelle zwischen den einander zugewandten Stirnseiten der Rohre überbrückende Kupplungseinrichtung mit einer inneren Dichtmanschette und einer diese von außen umfassenden Fixiermanschette vorgesehen ist, die aus mehreren, jeweils einem Umfangsabschnitt zugeordneten Segmenten besteht, die durch eine Spanneinrichtung zusammen gehalten werden. Bei dieser bekannten Anordnung sind jeweils zwei die mehrteilige Fixiermanschette bildende Segmente, die mit Abstand einander benachbarte Enden aufweisen, mit an ihre Enden angesetzten bzw. angeformten, über die ganze axiale Breite gehenden Schlaufen versehen, durch die jeweils ein Bolzen durchgesteckt ist, wobei die Bolzen der einander gegenüberliegenden Segmentenden durch zwei parallele Spannschrauben miteinander verbunden sind, so dass beim Anziehen der Spannschrauben eine auf die Segmente wirkende Zugkraft erzeugt wird. Eine derart ausgebildete Spanneinrichtung erlaubt jedoch keine gegenseitige Schränkung der einander benachbarten Segmente der mehrteiligen Fixiermanschette. Es ist daher nicht möglich, dass sich die Fixiermanschette konisch einstellt, was jedoch erforderlich wäre, um Rohre mit unterschiedlichem Außendurchmesser zu verbinden. Die bekannte Anordnung ist daher zum Verbinden von Rohren mit unterschiedlichem Außendurchmesser nicht geeignet und daher nicht universell verwendbar.

Die US-PS 4 380 348 und die US-PS 4 186 948 zeigen zwar Rohrkupplungen, welche die Verbindung von Rohren mit unterschiedlichem Außendurchmesser ermöglichen sollen. Die Fixiermanschette besteht dabei jeweils aus einem langen, endlichen Band, das mit einander überlappenden Enden um die Dichtmanschette herumgewickelt und durch zwei umlaufende Spanngurte zusammengehalten wird. Die so aufgebaute Fixiermanschette kann sich zwar konisch einstellen. Es besteht jedoch die Gefahr, dass sich die eine umfangsseitig nur an einer Stelle offene Umwicklung bildende Fixiermanschette bei der Verkürzung des einen Spanngurts zum Zwecke einer Durchmesserverkleinerung nicht auf dem gesamten Umfang gleichmäßig in radialer Richtung zusammen zieht, sondern dass die Umfangs- und Durchmesserverkleinerung in erster Linie im Bereich der einander überlappenden Enden stattfindet. Die Folge davon ist, dass sich ein Konus mit gegenüber der ursprünglichen Achse schräger Achse ergibt, wodurch im Falle einer Rohrverbindung die beiden miteinander zu verbindenden Rohre in radialer Richtung gegeneinander verschoben werden und so ein unerwünschter sogenannter Sohlversatz erzeugt wird. Anordnungen dieser Art sind daher nicht zuverlässig genug.

Die EP 2 072 877 B1 zeigt eine Vorrichtung zur Verbindung von zwei unterschiedliche Außendurchmesser aufweisenden Rohren, bei der die Fixiermanschette als in sich geschlossener Federkorb ausgebildet ist, der mit in axialer Richtung sich überschneidenden, raumgebenden Schlitzen versehen ist und durch umlaufende Spanngurte umfasst wird. Hierbei treten zwar die Nachteile des oben geschilderten Standes der Technik nicht auf. Die Herstellung des in sich geschlossenen Federkorbs mit axialen, raumgebenden Schlitzen erfordert jedoch einen erhöhten baulichen Aufwand, der bei vielen Anwendungsfällen, bei denen es beispielsweise nur um kleinere Durchmesserunterschiede geht, aus wirtschaftlichen Gründen nicht gerechtfertigt ist.

Hiervon ausgehend ist es daher die Aufgabe der vorliegenden Erfindung, eine Vorrichtung zur Verbindung von Rundkörpern mit unterschiedlichem Außendurchmesser zu schaffen, die trotz eines vergleichsweise einfachen Aufbaus die Beibehaltung der Koaxialität der miteinander zu verbindenden Rundkörper gewährleistet.

Diese Aufgabe wird durch die dem Anspruch 1 zugrunde liegende Merkmalskombination gelöst.

Hierdurch kommt eine Vorrichtung zum Verbinden von zwei unterschiedliche Außendurchmesser aufweisenden Rundlingen, insbesondere Rohren, in Vorschlag, wobei eine die Stoßstelle zwischen den einander zugewandten Stirnseiten der Rundlinge überbrückende Kupplungseinrichtung vorgesehen ist, die eine innere Dichtmanschette und eine diese von außen umfassende, die Rundlinge in ihrer Position fixierende Fixiermanschette aufweist, die aus mehreren, jeweils einem Umfangsabschnitt zugeordneten Segmenten besteht, die durch eine Spanneinrichtung zusammen gehalten werden, wobei die aus mehreren Segmenten bestehende, mehrere umfangsseitige Unterbrechungen (9, 10) aufweisende Fixiermanschette zur Mittelachse konisch einstellbar ist, indem die Segmente der Fixiermanschette über ihrer ganzen Länge gegeneinander radial bewegbar und mittels der Spanneinrichtung winkelgleich gegeneinander anstellbar sind, und wobei die Spanneinrichtung im Bereich jeder Unterbrechung des Fixiermanschettenumfangs über der Manschettenlänge mindestens zwei voneinander unabhängige Spannorgane aufweist, die die zugeordneten Umfangsunterbrechungen (9, 10) überspannen und an der Außenseite des überspannten Umfangsabschnitts der Fixiermanschette anliegend verlaufen.

Hiermit werden die oben genannten Nachteile der bekannten Anordnungen vollständig vermieden. Die gegenseitige radiale Beweglichkeit der Segmente auf ihrer ganzen Länge ermöglicht die erwünschte Konusbildung. Da über der axialen Länge mehrere Spannorgane vorgesehen sind, lassen sich über der Länge unterschiedliche Konusdurchmesser einstellen. Da die Spannorgane an der Außenseite des überspannten Umfangsabschnitts der Fixiermanschette anliegend verlaufen, ist sichergestellt, dass durch den in Umfangsrichtung verlaufenden Zug der Zugorgane auf alle Segmente der Fixiermanschette gleiche, nach radial innen wirkende Presskräfte erzeugt werden, so dass die Segmente, denen genügend Freiheitsgrad zur Konusbildung gegeben ist, winkelgleich gegeneinander angestellt werden. Mit den erfindungsgemäßen Maßnahmen wird daher die oben genannte Aufgabe auf höchst einfache und kostengünstige Weise gelöst. Die mit der Erfindung erzielbaren Vorteile sind daher in einer ausgezeichneten Wirtschaftlichkeit zu sehen.

Vorteilhafte Ausgestaltungen und zweckmäßige Fortbildungen der übergeordneten Maßnahmen sind in den Unteransprüchen angegeben.

So können zur Bildung der mehrteiligen Fixiermanschette vorteilhaft nur zwei, jeweils einem halben Umfang zugeordnete Segmente vorgesehen sein. Eine derartige Zweiteilung reicht in der Regel aus, um die oben geschilderten Vorteile zu erzielen. Zudem erleichtert eine derartige Anordnung in vorteilhafter Weise auch die Montage. Die genannte Fortbildung führt daher in vorteilhafter Weise zu einer besonders einfachen und kostengünstigen Ausführung.

Eine weitere vorteilhafte Maßnahme kann darin bestehen, dass die Segmente der Fixiermanschette zumindest im Bereich eines umfangsseitigen Endes einen ebenen, in Längsrichtung verlaufenden Querschnitt aufweisen. Hierbei ist es in vorteilhafter Weise gemäß einer möglichen Ausführung möglich, dass die umfangsseitig aufeinander folgenden Segmente mit einander überlappenden Enden angeordnet werden. Dennoch haben die Segmente dabei einen ausreichenden Schwenkfreiheitsgrad bezüglich einer radialen Achse, so dass sich die Fixiermanschette trotz der gegenseitigen Über- bzw. Unterlappung der Segmente ungehindert konisch einstellen kann. Die gegenseitige Über- bzw. Unterlappung der aufeinander folgenden Segmente stellt sicher, dass die umfasste Dichtmanschette auf ihrem ganzen Umfang zuverlässig gepresst wird.

Gemäß einer weiteren Fortbildung der übergeordneten Maßnahmen können die Spannorgane mit ihren Enden jeweils in segmentseitigem Eingriff stehen. Der direkte Angriff der Spannorgane mit einem oder mehreren Segmenten erleichtert in vorteilhafter Weise die Montage der erfindungsgemäßen Vorrichtung. Vorteilhaft können dabei die Spannorgane so ausgebildet und angeordnet sein, dass sie von einem umfangsseitigen Randbereich zum gegenüber liegenden umfangsseitigen Randbereich desselben Segments reichen und dass jedes andere Segment hiervon umgriffen wird. Dies führt unter Beibehaltung der obigen Vorteile zu einer Anordnung mit besonders wenig Bauteilen.

Eine weitere, besonders zu bevorzugende Maßnahme kann dabei darin bestehen, dass der segmentseitige Winkelabstand der segmentseitigen Angriffspunkte der Spannorgane im gespannten Zustand einem Winkel von vorzugsweise 360° geteilt durch die Anzahl der vorhandenen Segmente plus/minus eines gewissen Toleranzbereichs entspricht. Hierdurch wird sichergestellt, dass auf alle Segmente gleiche, d.h. mittelpunktsymmetrische Radialkräfte wirken. Um den vorstehend genannten Winkel im gespannten Zustand zu erreichen, soll der Winkelabstand der Angriffspunkte der Spannorgane im ungespannten Zustand über dem jeweils betroffenen Segment gemessen vorzugsweise kleiner als 360° geteilt durch die Anzahl der vorhandenen Segmente sein, so dass genügend Spannweg gegeben ist.

Eine weitere, vorteilhafte Maßnahme kann darin bestehen, dass die an wenigstens einem Segment angreifenden Spannorgane so ausgebildet und/oder segmentseitig angeschlossen sind, dass sie in den Angriffspunkten in axialer Richtung auslenkbar sind. Hierdurch wird sichergestellt, dass eine gegenseitige Schränkung benachbarter Segmente und damit eine Konusbildung durch die Spannorgane nicht behindert wird.

Vorteilhaft kann zudem vorgesehen sein, dass die Dichtmanschette in radialer Richtung gut stauchbar ist, was vorteilhaft durch einen mäanderartigen Querschnitt erreicht werden kann. Hierdurch wird sichergestellt, dass die Dichtmanschette ein in eine konische Form pressbares Polster bildet, das auf dem ganzen Umfang gleiche, den äußeren Presskräften entgegengesetzte Gegenkräfte aufbringt.

Gemäß einer vorteilhaften Weiterbildung weist die Fixiermanschette zumindest zwei Unterbrechungen auf, an welchen jeweils zwei Segmente einen jeweiligen Umfangsspalt begrenzen, welcher von einem jeweiligen Brückensegment abgedeckt ist, welches die den Umfangsspalt begrenzenden Segmente untergreift. Damit kann das Brückensegment eine glatte Oberfläche für die Bewegung der beiden Enden der Segmente relativ zueinander bereitstellen, wodurch diese Bewegung erleichtert wird. Ein Verhaken der Enden der Segmente mit der Dichtmanschette wird verhindert. Dies verbessert die Handhabbarkeit.

Bevorzugt weisen die Brückensegmente zumindest im Bereich eines jeweiligen umfangsseitigen Endes einen ebenen, in Längsrichtung verlaufenden Querschnitt auf. Damit wird eine glatte Oberfläche vorteilhaft bereitgestellt.

Weiter bevorzugt sind die Brückensegmente in Längsrichtung und in Umfangsrichtung unprofiliert. Dies führt zu vorteilhaften Auflageflächen des Brückensegments auf der Dichtungsmanschette und der Segmente auf den Brückensegmenten.

Weiter bevorzugt weisen die Brückensegmente an zumindest einem jeweiligen, ein Segment untergreifenden Abschnitt in axialer Richtung gegenüberliegende, kreisbogensegmentförmig ausgebildete Kanten auf. Diese erleichtern das gegenseiteige Verkippen der Segmente, da anliegende Kanten benachbarter Segmente bei Verkippung bis zu einem maximalen Winkel immer tangential verlaufen.

Das Brückensegment weist bevorzugt eine Anzahl von radial nach außen abstehenden Anschlägen auf, d.h. mindestens einen solchen Anschlag, welche eine Bewegung des Brückensegments in Umfangsrichtung begrenzen. Damit wird in vorteilhafter Weise verhindert, dass das Brückensegment so weit unter eines der Segmente rutscht, dass es das andere Segment nicht mehr untergreift.

Unter einer Anzahl von Anschlägen sei hier verstanden, dass entweder ein Anschlag vorhanden ist oder mehrere Anschläge vorhanden sind.

Weitere vorteilhafte Ausgestaltungen und zweckmäßige Fortbildungen der übergeordneten Maßnahmen sind in den restlichen Unteransprüchen angegeben und aus der nachstehenden Beschreibung einiger Beispiele anhand der Zeichnung näher entnehmbar.

In der nachstehend beschriebenen Zeichnung zeigen:
- Figur 1: einen Längsschnitt durch eine Rohrleitung mit zwei durch eine erfindungsgemäße Vorrichtung miteinander verbundenen Rohren mit unterschiedlichen Außendurchmessern,
- Figur 2: eine perspektivische Ansicht einer zweiteiligen Fixiermanschette mit zugeordneten Spannorganen im ungespannten Zustand,
- Figur 3: eine schematische Darstellung einer zweiteiligen, in eine konische Form gebrachten Fixiermanschette mit gegeneinander geschränkten Segmenten,
- Figur 4: ein Beispiel für einen einen Schwenkfreiheitsgrad gebenden, segmentseitigen Anschluss der Spannorgane,
- Figur 5: einen Radialschnitt durch die Anordnung gemäß Figur 2,
- Figur 6: eine Anordnung ähnlich Figur 2 im montierten, gespannten Zustand,
- Figur 7: eine Ansicht der der Ausführung gemäß Figur 6 zugrunde liegenden Segmente in gestrecktem Zustand,
- Figur 8: eine Einzeldarstellung eines Spannorgans mit Verbreiterung,
- Figur 9: eine perspektivische Ansicht einer alternativen Ausführung einer erfindungsgemäßen Vorrichtung,
- Figur 10: die Vorrichtung von Figur 9 in einer teilweise aufgeschnittenen Ansicht mit zwei Rohren,
- Figur 11: die Vorrichtung von Figur 9 in einer teilweisen Explosionsansicht,
- Figur 12: einzelne Bestandteile der Vorrichtung von Figur 9 und
- Figur 13: ein Beispiel eines Brückensegments mit geschwungener Außenkontur.

Hauptanwendungsgebiet der Erfindung ist die Verbindung von eine Rohrleitung bildenden Rohren mit unterschiedlichen Außendurchmessern. Unterschiedliche Außendurchmesser kommen auch bei Rohren mit gleichem Innendurchmesser häufig vor, beispielsweise wenn aus unterschiedlichen Materialien bestehende Rohre Verwendung finden. Die Rohre sind in der Regel innen kalibriert. Infolge der unterschiedlichen Materialien ergeben sich jedoch unterschiedliche Wandstärken und dementsprechend trotz gleichen Innendurchmessers unterschiedliche Außendurchmesser. Gerade in Fällen dieser Art kommt es bei der Verbindung aufeinanderfolgender Rohre sehr stark darauf an, dass sich kein radialer Versatz der aufeinanderfolgenden Rohre und damit keine innere, die Strömung behindernde Stufe ergibt. Die Koaxialität der Rohre soll durch die Verbindungsvorrichtung nicht gestört, sondern gewährleistet werden.

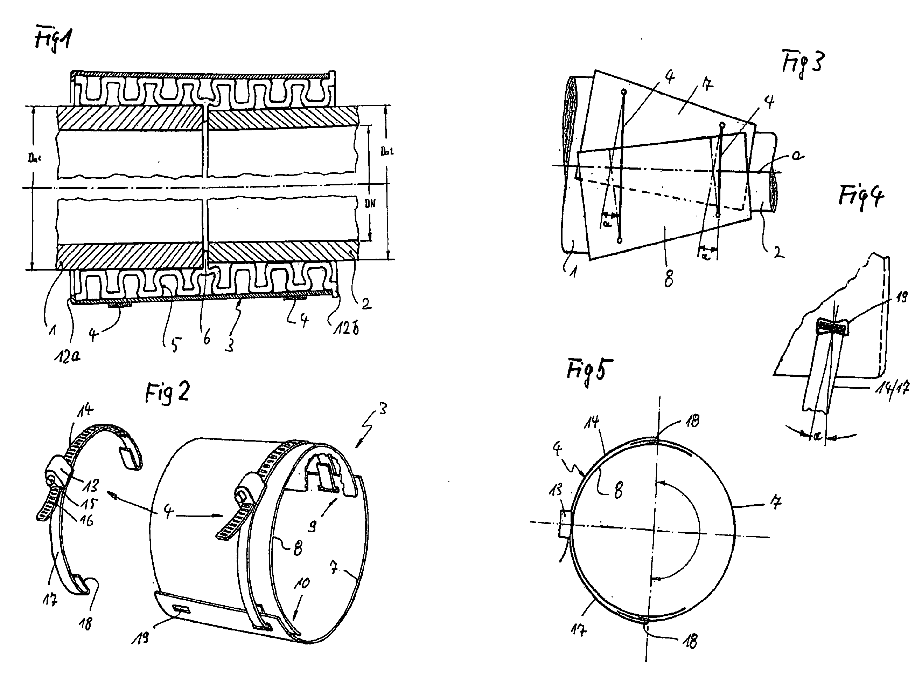

Die der Figur 1 zugrunde liegende Rohrleitung umfasst zwei aneinander anschließende Rundlinge in Form der Rohre 1, 2, die unterschiedliche Außendurchmesser Da1 und Da2 aufweisen. Der Innendurchmesser DN der beiden Rohre 1, 2 ist gleich. Die Rohre 1, 2 stoßen mit den einander zugewandten Stirnseiten direkt oder unter Zwischenschaltung einer Dichtung aneinander an und sind im Bereich dieser Stoßstelle miteinander verbunden. Hierzu ist eine umlaufende, die Stoßstelle überbrückende Kupplungseinrichtung mit einer äußeren, aus einem tragfähigen, zur Fixierung der Rohre 1, 2 gegen Querkräfte geeignetem Material bestehenden Fixiermanschette 3, die durch eine zugeordnete, mehrere Spannorgane 4 enthaltende Spanneinrichtung gespannt wird, und einer inneren, von der Fixiermanschette 3 umfassten und durch diese fixierbaren Dichtmanschette 5 vorgesehen, die aus elastischem Material, wie Gummi oder gummiähnlichem Kunststoff besteht und somit eine dichte Verbindung der Rohre 1, 2 und Übertragung der von der Fixiermanschette 3 ausgeübten Radialkräfte auf die Rohre 1, 2 ermöglicht. Die Dichtmanschette 5 kann umfangsseitig geschlossen, d.h. nach Art einer Muffe oder Büchse ausgebildet sein. Es wäre aber auch denkbar, die Dichtmanschette 5 als aufgewickelten Abschnitt eines extrudierten Profils auszubilden, dessen Enden mit stumpfem Stoß zusammenstoßen und beim Spannen der Fixiermanschette 3 dichtend aneinander angepresst werden.

Die Dichtmanschette 5 besitzt einen angeformten Innenflansch, der einen zwischen die einander zugewandten Stirnseiten der Rohre 1, 2 eingreifenden Längsmittenanschlag und/oder Dichtring 6 bilden kann. Der Querschnitt der Dichtmanschette 5 kann zweckmäßig mäanderartig ausgebildet sein, was eine gute Stauchbarkeit, das heißt Verformbarkeit in radialer Richtung ergibt und gleichzeitig dennoch eine ausreichende Steifigkeit und damit einen zuverlässigen, gegenseitigen Halt der beiden Rohre 1, 2 gewährleistet. Die Dichtmanschette 5 bildet somit praktisch eine Art Polster zwischen der Rohraußenseite und der Fixiermanschette 3, welches flächig an den Rohren 1, 2 anliegt und diese unter der Wirkung der flächig hieran anliegenden Fixiermanschette 3 zuverlässig in der gewünschten koaxialen Lage hält.

Die umlaufende Fixiermanschette 3 ist, wie anschaulich aus Figur 2 hervorgeht, mehrteilig ausgebildet, das heißt aus mehreren, umfangsseitig aufeinander folgenden, jeweils einem Umfangsabschnitt zugeordneten Segmenten aufgebaut, so dass sich auch mehrere umfangsseitige Unterbrechungen ergeben. Die Fixiermanschette 3 ist dementsprechend umfangsseitig nicht in sich geschlossen, sondern mehrfach offen. Bei der der Figur 2 zugrunde liegenden Fixiermanschette 3 sind zwei jeweils einem Umfangsabschnitt von 180° zugeordnete Segmente 7, 8 vorgesehen, deren einander jeweils zugewandte, umfangsseitige Enden sich im dargestellten Beispiel überlappen. Dabei ergeben sich zwei umfangsseitig um 180° gegeneinander versetzte Überlappungsbereiche, welche hier die Umfangsunterbrechungen 9, 10 bilden. Diesen sind die sie überspannenden Spannorgane 4 zugeordnet, durch welche die Segmente 7, 8 zusammengehalten werden. Über der axialen Breite der Segmente 7, 8 sind mehrere, im dargestellten Beispiel zwei derartige, voneinander unabhängige Spannorgane 4 vorgesehen, von denen in Figur 2 eines neben der Fixiermanschette 3 und eines im Eingriff mit der Fixiermanschette 3 gezeichnet ist. Es ist möglich, jeder Umfangsunterbrechung 9 bzw. 10 eigene, jeweils an beiden einander benachbarten Segmenten 7, 8 angreifende Spannorgane 4 zuzuordnen. In Figur 2 sind beiden Umfangsunterbrechungen 9, 10 gemeinsame, an den Randbereichen des Segments 7 angreifende und das andere Segment 8 umspannende Spannorgane 4 zugeordnet. Eine weitere Alternative könnte sein, ringförmig umlaufende, über sämtliche Umfangsunterbrechungen 9, 10 hinweg gehende und damit sämtliche Segmente 7, 8 umspannende Spannorgane 4 vorzusehen. In jedem Fall ist es jedoch so, dass die vorgesehenen Spannorgane 4 an der Außenseite des jeweils umgriffenen Umfangsabschnitts bzw. Umfangs anliegend verlaufen, um möglichst gleichmäßige, auf die Segmente 7, 8 wirkende Radialkräfte zu erzielen. Bei Ausführungen, bei denen die Spannorgane 4 mit ihren Enden an jeweils einem Endbereich eines Segments 7 bzw. 8 angreifen, bildet dieses praktisch die Verlängerung der Spannorgane 4, die ab den segmentseitigen Angriffspunkten mit derselben Krümmung wie die Segmente 7, 8 weiterlaufen.

Die Segmente 7, 8 der Fixiermanschette 3 können im Bereich wenigstens eines axialen Rands mit nach innen vorspringenden seitlichen Anschlägen 12a für die Dichtmanschette 5 versehen sein, wie in Figur 1 links angedeutet ist. Die Anschläge 12a können umlaufend ausgebildet sein oder sich nur über einen Teil der Umfangslänge des zugeordneten Segments erstrecken. Eine bevorzugte Alternative kann darin bestehen, dass die Dichtmanschette 5 stirnseitig mit einem radialen Anschlagbund 12b versehen ist, wie in Figur 1 rechts angedeutet ist. Ein derartiger Bund kann bei Bedarf leicht nachgeben. Die Segmente 7, 8 können einfach als aus Metallblech bestehende Blechformlinge oder aus einem Kunststoff geeigneter Festigkeit bestehende Kunststoffformlinge ausgebildet sein.

Die Spannorgane 4 besitzen jeweils, wie Figur 2 zeigt, ein Spannschloss 13, durch das zwei Spanngurtenden verstellbar miteinander verbunden sind. Im Falle eines einteilig umlaufenden Gurts sind das die beiden Enden dieses Gurts, wobei ein Ende das Spannschloss 13 trägt und das andere Ende in das Spannschloss 13 eingezogen wird. Dieses kann eine von außen betätigbare Schnecke 15 enthalten, die mit einem Umfangsbereich in eine zugeordnete Verzahnung 16 des einziehbaren Gurtendes eingreift. Bei der Ausführung gemäß Figur 2 sind zwei Gurte vorgesehen, nämlich ein in das Spannschloss 13 einziehbarer Spanngurt 14 und ein das Spannschloss 13 tragender Haltegurt 17. Die schlossfernen Enden des Spanngurts 14 und Haltegurts 17 greifen jeweils an einem umfangsseitigen Segmentrand bzw. Randbereich an. Sofern das Spannschloss 13 selbst an ein Segment angesetzt ist, wird nur der an einem anderen Segmentrand angreifende Spanngurt 14 benötigt.

Bei Anordnungen mit einander überlappenden Segmenten 7, 8 sind diese zweckmäßig zumindest im Bereich eines umfangsseitigen Endes mit einem ebenen, in Längsrichtung verlaufenden Querschnitt versehen, so dass gegenseitige Schwenkbewegungen ungehindert stattfinden können. Bei der Ausführung gemäß Figur 2 besitzen die Segmente 7, 8 auf ihrer ganzen Umfangslänge einen ebenen Querschnitt, so dass sich keinerlei Beschränkungen hinsichtlich einer Über- bzw. Unterlappung ergeben.

Bei dem der Figur 2 zugrunde liegenden Beispiel sind den beiden Überlappungsbereichen bzw. Unterbrechungen 9, 10 zwei gemeinsame Spannorgane 4 zugeordnet. Durch diese werden jeweils nur die Enden eines Segments, hier des Segments 7, miteinander verbunden und das andere Segment, hier das Segment 8, umspannt. Dieses ist hier mit beiden Enden mit dem Segment 7 im Eingriff. Die Anordnung ist dabei zweckmäßig so, dass die Enden des ersten, mit den Spannorganen 4 zusammenwirkenden Segments 7 die Enden des anderen, hierin eingreifenden, von den Spannorganen 4 umspannten Segments 8 übergreifen, so dass die Angriffspunkte der Gurte 14, 17 der Spannorgane 4 nahe bei den umfangsseitigen Endkanten des Segments 7 liegen können und dennoch Kollisionen des Segments 8 mit den Spannorganen 4 unterbleiben.

Die Spanngurte 14 und/oder Haltegurte 17 von nicht über den ganzen Umfang reichenden Spannorganen 4 sind in Umfangsrichtung segmentseitig fixiert und können hierzu durch Nieten etc. am zugeordneten Segmentende angebracht sein. Auch eine Clip- und/oder Rastverbindung wäre denkbar. Im dargestellten Beispiel sind die Spannorgane 4 an den betreffenden Enden des Segments 7 einfach eingehängt. Hierzu sind die Enden der bandförmigen Gurte 14, 17 einfach zur Bildung eines Einhänghakens 18 umgebogen. Im Bereich der zugeordneten segmentseitigen Enden sind den Einhänghaken 18 zugeordnete Einhängeinrichtungen 19 vorgesehen, die als aufgesetzte Bügel oder, wie im dargestellten Beispiel, einfach als schlitzförmige Ausnehmungen ausgebildet sein können.

Infolge des Außendurchmesserunterschieds der Rohre 1, 2 ergibt sich im montierten Zustand eine in Figur 1 erkennbare, konusförmige Gestalt der Kupplungseinrichtung mit Fixiermanschette 3 und und Dichtmanschette 5, wobei die Fixiermanschette 3 am Außenumfang der als Zwischenpolster fungierenden Dichtmanschette 5 anliegt und diese an den Außenumfang der Rohre 1, 2 anpresst, wodurch diese koaxial zueinander fixiert werden. Die Segmente 7, 8 der sich bezüglich der Mittelachse a konisch einstellenden, mehrteiligen Fixiermanschette 3 greifen dabei über ihrer axialen Länge in radialer Richtung mehr oder weniger ineinander ein, wodurch die Segmente 7, 8 eine gegenseitige Schränkung, das heißt eine gegenseitige Verschwenkung um eine radiale Achse, erfahren, wie in Figur 3 durch den Winkel α angedeutet ist. Diese Schwenkbewegung wird durch die Spannorgane 4 eingeleitet und erfolgt infolge einer bezüglich der Mittelachse a gleichen, d.h. mittelachssymmetrischen Belastung aller Segmente 7, 8 so, dass diese winkelgleich, d.h. mit gleichem Konuswinkel, gegeneinander angestellt werden. Im dargestellten Beispiel mit zwei Segmenten 7, 8 erfolgt die Schränkung bzw. Kippung der beiden Segmente symmetrisch zu einer zur Mittellängsachse a parallelen 180°-Linie.

Die Spannorgane 4 verlaufen dabei demgegenüber, wie Figur 3 weiter erkennen lässt, parallel zu einer zur Mittelachse der zueinander koaxialen Rohre 1, 2 rechtwinkligen Radialebene. Die Spannorgane 4 werden dementsprechend gegenüber den Segmenten 7, 8 um den Winkel α ausgelenkt. Um dies ohne Beschädigung der Spannorgane 4 zu ermöglichen, sind diese so angeordnet bzw. ausgebildet, dass diese Auslenkung möglich ist. Hierzu besitzen die Spannorgane 4 gegenüber den Segmenten 7, 8 der Fixiermanschette 3 einen entsprechenden Schwenkfreiheitsgrad bezüglich einer radialen Achse. Das kann mit einer Schwenklagerung oder einfach mit ausreichend Bewegungsspiel im Bereich der Einhängeinrichtungen 19 erreicht werden. Zweckmäßig können die Einhängeinrichtungen 19 hierzu, wie Figur 4 anschaulich zeigt, als Einhängschlitze mit von der Mitte zu den seitlichen Enden zunehmender lichter Weite ausgebildet sein, wodurch die Einhänghaken entsprechendes Bewegungsspiel bekommen. Es wäre aber unter Umständen auch denkbar, zur Bewerkstelligung der erforderlichen Auslenkbarkeit Dehnfalten oder dergleichen vorzusehen. Die vorstehenden, die ungehinderte Schwenkbarkeit der Segmente 7, 8 erleichternden Maßnahmen werden durch die weiter oben bereits erwähnte Querschnittsebenheit der Segmente 7, 8 unterstützt.

Um eine winkelgleiche gegenseitige Anstellung, d.h. einen gleichen Konuswinkel aller Segmente 7, 8 zu gewährleisten, sind die von den Spannorganen 4 auf die einzelnen Segmente 7, 8 ausgeübten Radialkräfte mittelachssymmetrisch, d.h. in der Größe gleich und lediglich um den Teilungswinkel gegeneinander versetzt. Dies ergibt sich bei Verwendung einteilig umlaufender Spannorgane automatisch. Bei Anordnungen der beispielsweise in Figur 2 gezeigten Art, bei denen die Spannorgane in segmentseitigem Eingriff sind, ist der über dem betreffenden Segment gesehene, d.h. segmentseitige Winkelabstand der segmentseitigen Angriffspunkte der Spannorgane 4 im gespannten Zustand hierzu gleich oder allenfalls etwas größer als 360° geteilt durch die Anzahl der vorhandenen Segmente. Im ungespannten Zustand soll dieser der Winkelabstand daher vorzugsweise kleiner oder höchstens gleich 360° geteilt durch die Anzahl der vorhandenen Segmente sein.

Bei einer Ausführung gemäß Figur 2 mit zwei jeweils einem halben Umfang zugeordneten Segmenten 7, 8 und mit an den umfangsseitigen Randbereichen nur eines Segments 7 angreifenden Spannorganen 4 ergibt sich dementsprechend, wie in Figur 5 verdeutlicht wird, im gespannten Zustand ein über dem mit den Spannorganen 4 im Eingriff stehenden Segments 7 gemessener Winkelabstand der Angriffspunkte der Spannorgane 4 von ideal 180°, wobei sich in der Praxis immer ein gewisser Toleranzbereich plus/minus ergibt. Im ungespannten Zustand ist der genannte Winkel dementsprechend vorzugsweise kleiner als 180°, um genügend Spannweg zu haben.

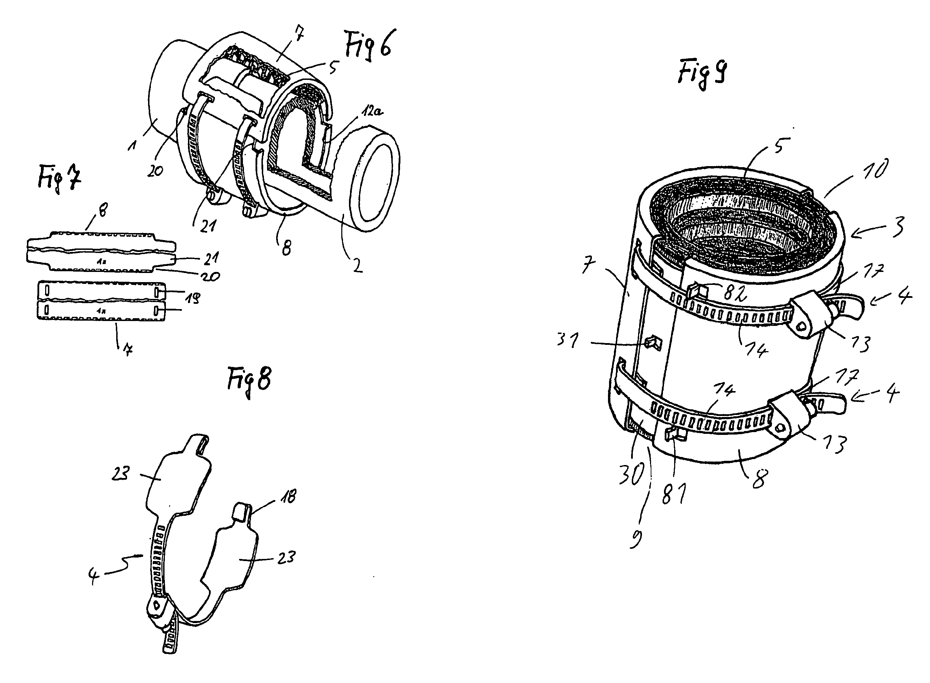

Bei den Beispielen gemäß Figuren 6, 7 sind die Segmente 7, 8 mit oben schon erwähnten stirnseitigen Innenstegen zur Bildung stirnseitiger Anschläge 12a versehen. Ferner ist dabei die der Figur 2 zugrunde liegende Anordnung der Segmente 7, 8 verwirklicht, das heißt beide Enden des Segments 8 werden von den jeweils zugewandten Enden des Segments 7 übergriffen, wobei die Spanneinrichtungen 4 nur an den Enden dieses Segments 7 angreifen, die das andere Segment 8 bzw. dessen nicht in das Segment 7 eingreifenden Bereich umfassen. Dabei können, wie Figur 7 erkennen lässt, unterschiedliche Gestaltungen der Segmente 7, 8 vorgesehen sein. Das Segment 7, an dessen Enden die Spannorgane 4 eingehängt werden, ist dabei im Bereich seiner Enden mit den Spannorganen 4 zugeordneten, hier schlitzförmigen Einhängeinrichtungen 19 versehen. Das zweite Segment 8 ist im Bereich seiner Enden mit randseitigen, axialen Ausklinkungen 20 versehen, so dass sich an beiden Enden vorspringende Zungen 21 ergeben, mit denen das Segment 8 zwischen die axialen, der Dichtmanschette 5, zugeordneten Anschläge 12a des Segments 7 eingreifen kann. Im Bereich der durch die Ausklinkungen 20 gebildeten Zungen 21 besitzt das Segment 8 damit den oben bereits erwähnten ebenen Querschnitt, was ungehinderte Schränkbewegungen der beiden Segmente 7, 8 ermöglicht. Die im Falle einer Schränkbewegung örtlich sich ergebende axiale Verlagerung der Kanten wird durch die Elastizität der Dichtmanschette 5 ausgeglichen. Soweit die Anschläge 12a an den Endbereichen des Segments 7 fehlen, kann auch auf die Ausbildung der Zungen 21 im Bereich des Segments 8 verzichtet werden, da dann auf dem ganzen Segmentumfang ein ebener Querschnitt vorgesehen sein kann, wie das z.B. bei Figur 2 der Fall ist.

Es wäre natürlich auch denkbar, dass sich die Segmente 7, 8 der mehrteiligen Fixiermanschette 3 mit ihren Enden abwechselnd über- bzw. untergreifen, das heißt dass beispielsweise das Segment 7 im Bereich des einen Überlappungsbereichs mit seinem dortigen Ende das zugewandte Ende des benachbarten Segments 8 übergreift und im Bereich des anderen Überlappungsbereichs mit seinem dortigen Ende unter das zugewandte Ende des benachbarten Segments 8 eingreift. Bei einer derartigen Ausführung können die Segmente 7, 8 gleich ausgebildet sein. Ein derartiges Segment kann dabei, wie in Figur 7 unten, im Bereich beider Enden mit Einhängeinrichtungen 19 und im Bereich eines Endes mit einer Zunge 21 versehen sein, die zwischen die axialen Anschläge 18 des jeweils benachbarten Segments eingreifen kann, sofern solche Anschläge vorgesehen sind. Dabei können jedem Überlappungsbereich eigene Spannorgane 4 zugeordnet sein, die an den einander zugewandten Enden der jeweils benachbarten Segmente 7, 8 angreifen oder die Spannorgane 4 können, wie oben, jeweils vom einen Ende eines Segments über das andere Segment hinweg bis zum anderen Ende des ersten Segments verlaufen. In einem derartigen Fall blieben die schlitzförmigen Einhängeinrichtungen 19 eines Segments einfach unbelegt.

Gemäß einer weiteren Möglichkeit kann vorgesehen sein, dass die Segmente 7, 8 einander nicht über- bzw. unterlappend ausgebildet sind, sondern einander gegenüberliegende Umfangsspalte der mehrteiligen Fixiermanschette 3 begrenzen, in denen die Dichtmanschette sichtbar ist. Der kleinste Durchmesser beim Anziehen der Spannorgane 4 wird hier erreicht, wenn die einander zugewandten Enden der Segmente 7, 8 einander berühren. In der Regel sollte es jedoch hierzu nicht kommen. Im Bereich der genannten Umfangsspalte der mehrteiligen Fixiermanschette 3 wird die Dichtmanschette 5 von den Spannorganen 4 abgestützt. Diese können hierzu gemäß Figur 8 mit den genannten Umfangsspalten zugeordneten Verbreiterungen 23 versehen sein, durch welche die genannten Umfangsspalte weitestgehend abgedeckt werden.

Bei Ausführungen mit durch die Spannorgane 4 miteinander verbundenen Segmenten 7, 8 werden diese durch die Spannorgane 4 daran gehindert, in Umfangsrichtung gegeneinander zu verrutschen. Bei Segmenten ohne derartigen Halteeingriff eines Spannorgans kann dies durch eine geeignete Verriegelung gegenüber der Dichtmanschette 5 erfolgen, die hierzu z.B. mit einem radialen Vorsprung in eine segmentseitige Ausnehmung eingreifen kann und umgekehrt. Der erforderliche Schwenkfreiheitsgrad der Segmente bleibt jedoch erhalten.

Figur 9 zeigt eine alternative Ausführung einer Vorrichtung zum Verbinden von zwei Rundlingen. Bei dieser ist ebenso wie bei den bisher vorgestellten Ausführungen eine Dichtmanschette 5 vorgesehen. Auf dieser befinden sich außenseitig zwei Segmente 7, 8 der Fixiermanschette 3. Das Segment 7 ist dabei vorliegend als Zugschale ausgebildet. Das Segment 8 ist demgegenüber als Gegenschale ausgebildet. Die Segmente 7, 8 sind durch zwei Umfangsunterbrechungen 9, 10 voneinander getrennt.

Im Gegensatz zu den bisher bereits gezeigten Ausführungen der Figuren 1 bis 8 sind die Segmente 7, 8 an den Umfangsunterbrechungen 9, 10 nicht überlappend ausgebildet. Vielmehr ist an den Umfangsunterbrechungen 9, 10 jeweils ein Brückensegment 30 vorgesehen, wovon in Figur 9 lediglich ein Brückensegment 30 zu sehen ist. Das Brückensegment 30 untergreift die einander zugewandten Endbereiche der Segmente 7, 8 und liegt auf der Dichtmanschette 5 auf.

Ebenso wie bei den bereits gezeigten Ausführungen sind an dem Segment 7 die Spanngurte 14 von zwei Spannorganen 4 eingehängt, welche das Segment 8 umgreifen. Mit Hilfe der Spannorgane 4 kann, wie bereits weiter oben beschrieben wurde, ein Zug auf das Segment 7 in Umfangsrichtung erzeugt werden, wobei gleichzeitig das Segment 8 in Richtung des Segments 7 gedrückt wird. Damit wird die Fixiermanschette 3 in der oben bereits beschriebenen Weise angespannt, damit sie zwei Rohre, welche in Figur 9 nicht gezeigt sind, gegeneinander fixieren kann.

In erster Linie dient das Brückenelement 30 dazu, im Bereich der Umfangsunterbrechungen 9, 10 die Dichtmanschette 5 von radial außen abzustützen, so dass diese im Bereich zwischen zwei umfangsseitig mit Abstand aufeinander folgenden Segmenten nicht ausweichen kann. Dies begünstigt die erwünschte Koaxialität der miteinander zu verbindenden Rundlinge bzw. Rohre. Mit Hilfe der Brückensegmente können vergleichsweise große Umfangsunterbrechungen und dementsprechend vergleichsweise große Durchmesserunterschiede der miteinander zu verbindenden Rundlinge bzw. Rohre zugelassen werden.

Wenn durch eine Veränderung der Spannung an zumindest einem der Spannorgane 4 oder durch sonstige Krafteinwirkung eine Bewegung der jeweiligen Endbereiche der Segmente 7 und 8 relativ zueinander erfolgen sollten, so dient das Brückensegment 30 ferner als ebene Unterlage, auf welcher sich die jeweiligen Enden der Segmente 7, 8 bewegen können. Damit wird verhindert, dass auch nur eines der jeweiligen Enden der Segmente 7, 8 unmittelbar auf der Dichtmanschette 5 reibt. Damit wird sowohl eine Beschädigung der Dichtmanschette 5 wie auch ein eventuelles Verhaken der Segmente 7, 8 an der Dichtmanschette 5 verhindert. Hierzu weist das Brückensegment 30 in Längsrichtung einen eben verlaufenden Querschnitt auf. Es ist besonders entscheidend, dass dieser ebene, in Längsrichtung verlaufende Querschnitt zumindest in den Bereichen der umfangsseitigen Enden ausgebildet ist.

Das Brückensegment 30 weist einen Vorsprung 31 auf, welcher vorliegend dadurch ausgebildet ist, dass ein rechteckiger Abschnitt des Brückensegments 30 entlang von drei seiner Seiten aus dem Brückensegment 30 herausgeschnitten und nach außen gebogen wurde, wobei der rechteckige Abschnitt nach wie vor entlang einer seiner Seiten mit dem Rest des Brückensegments 30 verbunden bleibt. Statt eines etwa mittig angeordneten Vorsprungs 31 könnten natürlich auch mehrere über die axiale Breite verteilte Vorsprünge vorgesehen sein. Ebenso wäre es denkbar dass das Brückensegment 30 für jedes hiermit zusammenwirkende Segment 7, 8 einen oder mehrere als Anschläge fungierende Vorsprünge 31 aufweist. Statt einer umgebogenen Zunge kann zur Bildung eines Vorsprungs 31 auch eine aus dem Brückensegment herausgespresste Hutze oder dergleichen vorgesehen sein. Auch eine Ausführung mit nachträglich angesetztem Vorsprung wäre denkbar.

Der Vorsprung 31 begrenzt die Beweglichkeit des Brückensegments 30 relativ zu den beiden Segmenten 7, 8 in Umfangsrichtung. Würde beispielsweise das Brückensegment 30 weiter unter das Segment 7 in Umfangsrichtung rutschen, so würde das Brückensegment 30 mit seinem Vorsprung 31 an dem umfangsseitigen Ende des Segments 7 anstoßen. Damit würde eine weitere Relativbewegung in der gleichen Richtung verhindert werden. Gleiches gilt für eine Bewegung in anderer Richtung, wobei der Vorsprung 31 dann an dem umfangsseitigen Ende des Segments 8 anstoßen würde. Durch den Vorsprung 31 kann somit effektiv verhindert werden, dass das Brückensegment 30 sich so weit aus seiner gewünschten Position entfernt, dass es seine Aufgabe, die Dichtmanschette 5 im Bereich der jeweils zugeordneten Umfangsunterbrechung 9 bzw. 10 abzustützen sowie die jeweiligen Enden der Segmente 7, 8 an der Umfangsunterbrechung 9 von der Dichtmanschette 5 zu trennen, nicht mehr erfüllen könnte. Insbesondere wird verhindert, dass es so weit unter eines der Segmente 7, 8 rutscht, dass es das andere Segment nicht mehr untergreifen würde.

Das von den Spannorganen 4 umgriffene Segment 8 weist im Bereich seiner axialen Randbereiche Vorsprünge 81, 82 auf, welche ähnlich wie der Vorsprung 31 hergestellt sind. Sie befinden sich hier in der Nähe zum umfangsseitigen Ende des Segments 8 an der Umfangsunterbrechung 9. Es könnten aber auch mehrere über die Umfangslänge verteilte derartige Vorsprünge vorgesehen sein. Diese begrenzen die Beweglichkeit der Spannorgane 4 in axialer Richtung. Damit werden die Spannorgane 4 stabilisiert. Obiges gilt für jedes von Spannorganen 4 umgriffene Segment. Bei Ausführungen mit mehr als zwei Segmenten kann es daher vorkommen, dass die einander zugewandten Endbereiche beider eine Umfangsunterbrechung begrenzender Segmente mit Vorsprüngen 81, 82 oben genannter Art versehen sind.

Die Spannorgane 4 weisen ebenso wie die bereits besprochenen Spannorgane im Wesentlichen einen Spanngurt 14, ein Spannschloss 13 und einen Haltegurt 17 auf, wobei das Spannschloss 13 auf dem Haltegurt 17 befestigt ist und der Spanngurt 14 mittels einer Verzahnung relativ dazu verschoben werden kann.

Das Brückensegment 30 ist wie dargestellt in Längsrichtung und in Umfangsrichtung unprofiliert, was ideale Auflageflächen bietet.

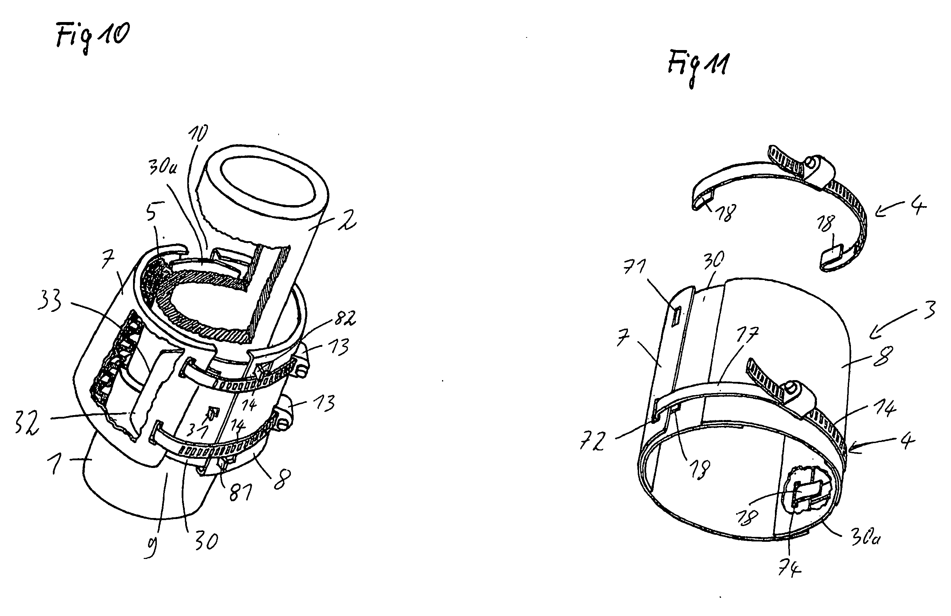

In der Darstellung von Figur 10 sind zwei Rohre 1, 2 gezeigt, wobei ebenso wie bei der Darstellung von Figur 1 Rohr 1 einen größeren Außendurchmesser hat als Rohr 2. Die beiden Rohre 1, 2 sollen mittels der Fixiermanschette 3 und der Dichtmanschette 5 von Figur 9 miteinander verbunden werden. Des weiteren ist in Figur 10 im Unterschied zu Figur 9 das Segment 7 teilweise aufgeschnitten gezeigt.

Wie in Figur 10 zu sehen ist weist das Brückensegment 30 an einem umfangsseitigen Endbereich 32 eine sich verjüngende Form auf. Damit kann die Beweglichkeit des Segments 7 relativ zum Brückensegment 30 verbessert werden. An seinem umfangsseitigen Ende weist das Brückensegment 30 eine gerade Kante 33 auf.

Des weiteren ist in Figur 10 ein weiteres Brückensegment 30a zu sehen, das die andere Umfangsunterbrechung 10 überdeckt und wie das erste Brückensegment so aufgebaut ist.

Figur 11 zeigt die Fixiermanschette 3 in teilweiser Explosionsansicht und ohne die Rohre 1, 2 sowie ohne die Dichtmanschette 5. Dabei ist deutlich zu erkennen, dass die Spannorgane 4 mittels jeweiliger Einhängehaken 18 in entsprechende Einhängeeinrichtungen eingehängt werden, von welchen in Figur 11 die Einhängeeinrichtungen 71, 72, 74 zu sehen sind. Eine weitere Einhängeeinrichtung 73 ist in der Darstellung von Figur 11 nicht sichtbar. Es ist erkennbar, dass ein Spannen der Fixiermanschette 3 auf ganz ähnliche Art erfolgen kann wie im Fall der Ausführungen der Figuren 1 bis 8.

In der Ausführung von Figur 11 ist im Gegensatz zur Ausführung der Figuren 9 und 10 kein Vorsprung 31 an dem Brückensegment 30 ausgebildet. Eine solche Ausführung ist besonders vorteilhaft, wenn ansonsten die Gefahr besteht, dass sich der Vorsprung an umliegenden Gegenständen verhakt oder diese beschädigt. Bei einer solchen Ausführung obliegt es dem Benutzer, durch entsprechende Achtsamkeit ein zu weites Verrutschen des Brückensegments 30 zu verhindern.

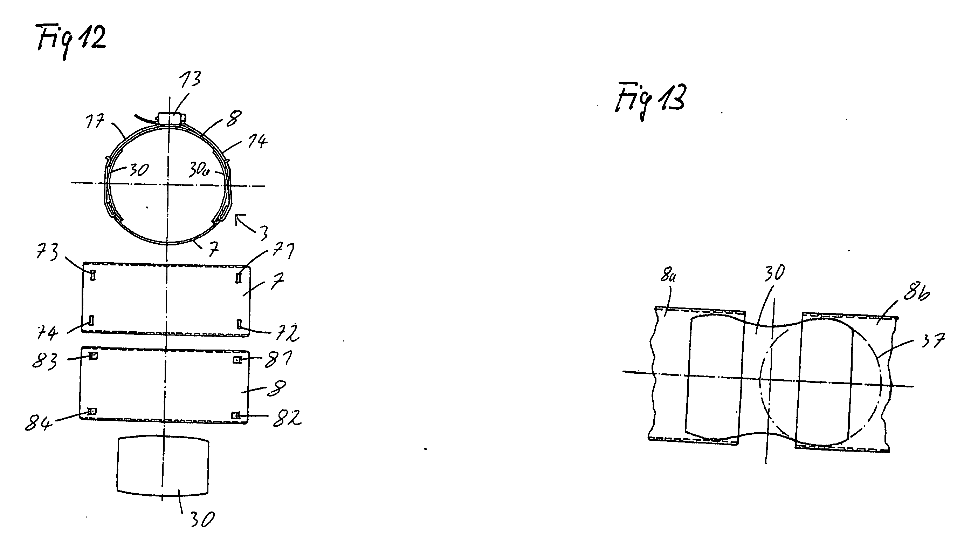

Figur 12 zeigt einzelne Bestandteile der Fixiermanschette 3. Im oberen Bereich von Figur 12 ist die Fixiermanschette 3 zusammengebaut gezeigt. Darunter ist zunächst das Segment 7 gezeigt, wobei die vier bereits im Zusammenhang mit Figur 11 erwähnten Einhängeeinrichtungen 71, 72, 73, 74 in Form von Ausnehmungen mit der bereits im Zusammenhang mit Figur 4 erläuterten Form gezeigt sind. Darunter ist das Segment 8 mit vier Vorsprüngen 81, 82, 83, 84 mit der bereits erwähnten Funktion gezeigt. Wiederum darunter ist das Brückensegment 30 gezeigt, wobei bei dem Brückensegment 30 von Figur 12, ebenso wie bei demjenigen von Figur 11, kein Vorsprung 31 ausgebildet ist.

Figur 13 zeigt eine mögliche Ausführung des Brückensegments 30 zusammen mit zwei Segmenten 8a, 8b. Dabei ist angedeutet, auf welcher Grundlage die Gestaltung des Brückensegments 30 erfolgen kann. Mit Bezugszeichen 37 ist ein gedachter Kreis dargestellt, dessen Umfangslinie in Strich-Punkt-Darstellung gezeigt ist. Wie zu sehen ist, entspricht der Umfang des Kreises 37 an zwei sich gegenüberliegenden Kreisbogenabschnitten der äußeren Kontur des Brückensegments 30. Das Brückensegment 30 hat somit zwei gegenüberliegende kreisbogensegmentförmige Abschnitte seiner Außenkontur.

Mit der hier gezeigten Ausführung des Brückensegments 30 ist es besonders leicht möglich, die beiden Segmente 8a, 8b gegeneinander zu verkippen. Unabhängig von der Stellung der beiden Segmente 8a, 8b zueinander liegen diese in identischer Weise an der Außenkontur des Brückensegments 30 an. Dies gilt, solange ein maximaler Kippwinkel nicht überschritten wird, welcher jedoch für übliche Anwendungen ausreicht.

Die besondere Eignung der dargestellten kreisbogensegmentförmigen Außenkontur ergibt sich daraus, dass bei Verkippung eines der Segmente 8a, 8b relativ zum Brückensegment 30 die geraden Außenkanten der Segmente 8a, 8b weiterhin tangential zur Außenkontur des Brückensegments 30 verlaufen. Somit ändert sich diesbezüglich nichts am Zustand des Segments 8a, 8b relativ zum relevanten Teil des Brückensegments. Selbstverständlich können auch bei einem Brückenelement 30 mit teilweise kreisbogensegmentförmiger Außenkontur ein oder mehr Vorsprünge 31 zur Bildung eines Anschlags vorgesehen sein.

## Patentansprüche

1. Vorrichtung zum Verbinden von zwei unterschiedliche Außendurchmesser aufweisenden Rundlingen, insbesondere Rohren (1, 2) mit einer die Stoßstelle zwischen den einander zugewandten Stirnseiten der Rundlinge überbrückenden Kupplungseinrichtung mit einer inneren Dichtmanschette (5) und einer diese von außen umfassenden, die Rundlinge in ihrer Position fixierenden Fixiermanschette (3), die aus mehreren, jeweils einem Umfangsabschnitt zugeordneten Segmenten (7, 8) besteht, die durch eine Spanneinrichtung zusammengehalten werden, wobei die aus mehreren Segmenten (7,8) bestehende, mehrere umfangsseitige Unterbrechungen (9,10) aufweisende Fixiermanschette (3) zur Mittelachse (a) konisch einstellbar ist, wobei die Segmente (7,8) der Fixiermanschette (3) über ihrer ganzen Länge gegeneinander radial bewegbar und mittels der Spanneinrichtung winkelgleich gegeneinander anstellbar sind, und wobei die Spanneinrichtung im Bereich jeder Unterbrechung (9, 10) des Fixiermanschettenumfangs über der Manschettenlänge mindestens zwei voneinander unabhängige Spannorgane (4) aufweist, die die zugeordneten Umfangsunterbrechungen (9,10) überspannen und an der Außenseite des überspannten Umfangsabschnitts der Fixiermanschette (3) anliegend verlaufen.

2. Vorrichtung nach Anspruch 1, **dadurch gekennzeichnet, dass** zur Bildung der mehrteiligen Fixiermanschette (3) zwei jeweils einem halben Umfang zugeordnete Segmente (7, 8) vorgesehen sind.

3. Vorrichtung nach einem der vorhergehenden Ansprüche, **dadurch gekennzeichnet, dass** die Segmente (7, 8) der Fixiermanschette (3) zumindest im Bereich eines umfangsseitigen Endes einen ebenen, in Längsrichtung verlaufenden Querschnitt aufweisen.

4. Vorrichtung nach einem der vorhergehenden Ansprüche, **dadurch gekennzeichnet, dass** die Spannorgane (4) mit ihren Enden in gegenseitigem Halteeingriff sind, und/oder dass die Spannorgane (4) von einem Längsrandbereich zum gegenüberliegenden Längsrandbereich desselben Segments (7) reichen und dass jedes andere Segment (8) von den Spannorganen (4) umgriffen ist.

5. Vorrichtung nach Anspruch 4, **dadurch gekennzeichnet, dass** der segmentseitige Winkelabstand der segmentseitigen Angriffspunkte der Spannorgane (4) im gespannten Zustand gleich oder etwas größer als 360° geteilt durch die Anzahl der vorhandenen Segmente ist, und/oder dass der segmentseitige Winkelabstand der segmentseitigen Angriffspunkte der Spannorgane (4) im ungespannten Zustand, kleiner als, oder höchstens gleich einem Winkel von 360° geteilt durch die Anzahl der vorhandenen Segmente (7, 8) ist.

6. Vorrichtung nach einem der vorhergehenden Ansprüche, **dadurch gekennzeichnet, dass** die an mindestens einem Segment (7) angreifenden Spannorgane (4) so ausgebildet und/oder segmentseitig angeschlossen sind, dass sie in axialer Richtung auslenkbar sind.

7. Vorrichtung nach Anspruch 6, **dadurch gekennzeichnet, dass** die Spannorgane (4) durch ein Spannschloss (13) miteinander verbundene Gurte (14, 17) aufweisen, die mit ihren einander entgegengesetzten Enden vorzugsweise mit Spiel in Schwenkrichtung bezüglich einer radialen Achse in einen jeweils zugeordneten, segmentseitig vorgesehenen Einhängeschlitz (19) einhängbar sind, wobei bevorzugt die Gurte (14, 17) als im Querschnitt rechteckige Bänder ausgebildet sind und die Einhängeschlitze (19) eine von der Mitte zu den seitlichen Enden zunehmende, lichte Weite aufweisen.

8. Vorrichtung nach einem der Ansprüche 4 bis 7, **dadurch gekennzeichnet, dass** die jeweils mindestens eine umfangsseitige Unterbrechung (9, 10) der Fixiermanschette (3) überspannenden Spannorgane (4) jeweils eine der überspannten Unterbrechung zugeordnete Verbreiterung (23) aufweisen.

9. Vorrichtung nach einem der Ansprüche 2 bis 8, **dadurch gekennzeichnet, dass** wenigsten ein Segment (7, 8) vorzugsweise jedes von den Spannorganen (4) nur umgriffene Segment (8) gegenüber der Dichtmanschette (5) gegen Verrutschen in Umfangsrichtung verriegelt ist.

10. Vorrichtung nach wenigstens einem der vorhergehenden Ansprüche, **dadurch gekennzeichnet, dass** die Dichtmanschette (5) einen in radialer Richtung stauchbaren, vorzugsweise mäanderartigen Querschnitt aufweist.

11. Vorrichtung nach einem der vorhergehenden Ansprüche, **dadurch gekennzeichnet, dass** an einem von den Spannorganen (4) nur umgriffenen Segment (8) eine Anzahl von radial nach außen abstehenden Anschlägen ausgebildet ist, welche zumindest ein Spannorgan (4) in zumindest einer axialen Richtung fixieren.

12. Vorrichtung nach einem der vorhergehenden Ansprüche, **dadurch gekennzeichnet, dass** die Segmente (7, 8) der mehrteiligen Fixiermanschette (3) mit ihren einander zugewandten Seitenrandbereichen einander über- bzw. untergreifen, wobei die Seitenrandbereiche eines von den Spannorganen (4) nur umgriffenen Segments (8) von den durch die Spannorgane (4) miteinander verbundenen Randbereichen des anderen Segments (7) übergriffen sind.

13. Vorrichtung nach einem der Ansprüche 1 bis 11, **dadurch gekennzeichnet, dass** die Fixiermanschette (3) zumindest zwei Unterbrechungen (9, 10) aufweist, an welchen jeweils zwei Segmente (7, 8) einen jeweiligen Umfangsspalt begrenzen, welcher von einem jeweiligen Brückensegment (30, 30a) abgedeckt ist, welches die den Umfangsspalt (9, 10) begrenzenden Segmente (7, 8) untergreift.

14. Vorrichtung nach Anspruch 13, **dadurch gekennzeichnet, dass** die Brückensegmente (30, 30a) in Längsrichtung und in Umfangsrichtung unprofiliert sind und vorzugsweise an zumindest einem, ein Segment (7, 8) untergreifenden Abschnitt in axialer Richtung einander gegenüberliegende, kreisbogensegmentförmig ausgebildete Kanten aufweisen.

15. Vorrichtung nach einem der Ansprüche 13 oder 14, **dadurch gekennzeichnet, dass** die Brückensegmente (30, 30a) wenigstens einen radial nach außen abstehenden Anschlag (31) aufweisen, welcher eine Bewegung des jeweiligen Brückensegments in Umfangsrichtung begrenzt.

## Claims

1. A device for connecting round parts with two different external diameters, in particular tubes (1, 2), having a coupling device bridging the abutment point between the end faces of the round parts mutually facing each other, such coupling device having an inner sealing sleeve (5) and further a fixing sleeve (3) enclosing the said inner sealing sleeve (5) from the outside and fixing the round parts in their position, such fixing sleeve (3) consisting of several segments (7, 8) associated with a circumferential section which are held together by a tensioning device, with the fixing sleeve (3) consisting of several segments (7, 8) and having several circumferential interruptions (9, 10) being conically adjustable towards the central axis (a), with the segments (7, 8) of the fixing sleeve (3) being radially moveable relative to each other along its entire length and by means of the tensioning device are moveable into contact against each other at an equal angle, and with the tensioning device in the area of each interruption (9, 10) of the fixing sleeve circumference over the sleeve length is provided with at least two tensioning devices (4) independent from each other bridging the associated circumference interruptions (9, 10) and extending in close contact along the outer side of the bridged circumferential section of the fixing sleeve (3).

2. A device in accordance with Claim 1, **characterised in that** provision is made for two segments (7, 8) each associated with half a circumference in order to form the multipart fixing sleeve (3).

3. A device in accordance with any of the preceding Claims, **characterised in that** the segments (7, 8) of the fixing sleeve (3) at least in the area of a circumferential end have an even cross section extending in a longitudinal direction.

4. A device in accordance with any of the preceding Claims, **characterised in that** the tensioning devices (4) with their ends are in mutual engagement and/or that the tensioning devices (4) reach from one longitudinal rim area to the opposite longitudinal rim area of the same segment (7), and further that each other segment (8) is enclosed by the tensioning devices (4).

5. A device in accordance with Claim 4, **characterised in that** the segment side angle distance of the segment side points of contact of the tensioning devices (4) in tensioned state is equal or slightly bigger than 360° divided by the number of existing segments and/or that the segment side angle distance of the segment side points of action of the tensioning devices (4) in released state is smaller than or maximally equals an angle of 360° divided by the number of existing segments (7, 8).

6. A device in accordance with any of the preceding Claims, **characterised in that** the tensioning devices (4) acting on at least one segment (7) are designed in such a manner and/or connected with the segment side that they are deflectable in an axial direction.

7. A device in accordance with Claim 6, **characterised in that** the tensioning devices (4) are provided with belts (14, 17) connected with each other by a tensioning lock (13), which are attachable with their mutually opposite ends, preferably with play in a swivel direction relative to a radial axis, in an associated attachment slot (19) provided at the segment side, with the belts (14, 17) being preferably designed as straps having a rectangular cross section, and further that the attachment slots (19) have a clear height increasing from the middle to the lateral ends.

8. A device in accordance with any of the Claims 4 to 7, **characterised in that** the tensioning devices (4) bridging at least one circumference side interruption (9, 10) each of the fixing sleeve (3) are provided with an enlargement (23) associated with the bridged interruption.

9. A device in accordance with any of the Claims 2 to 8, **characterised in that** at least one segment (7, 8), preferably each segment (8) only enclosed by the tensioning device (4) is locked against slipping in a circumferential direction relative to the sealing sleeve (5).

10. A device in accordance with at least one of the preceding Claims, **characterised in that** the sealing sleeve (5) has a preferably meander like cross section which is compressable in a radial direction.

11. A device in accordance with any of the preceding Claims, **characterised in that** on one segment (8) only enclosed by the tensioning devices (4) a number of radially outward extending limit stops is arranged fixing at least one tensioning device (4) in at least one axial direction.

12. A device in accordance with any of the preceding Claims, **characterised in that** the segments (7, 8) of the multipart fixing sleeve (3) with their mutually facing lateral rim areas overlap each other and/or extend underneath of each other, with the lateral rim areas of a segment (8) only enclosed by the tensioning devices (4) are overlapped by the rim areas of the other segment (7) which are connected by the tensioning devices (4).

13. A device in accordance with any of the Claims 1 to 11, **characterised in that** the fixing sleeve (3) is provided with at least two interruptions (9, 10) on which two segments (7, 8) each limit a respective circumference slot which is covered by a respective bridge segment (30, 30a) extending underneath the segments (7, 8) limiting the circumference slot (9, 10).

14. A device in accordance with Claim 13 **characterised in that** the bridge segments (30, 30a) are unprofiled in a longitudinal and circumferential direction and preferably on at least one section extending underneath a segment (7, 8) are provided with edges arranged opposite each other in an axial direction and being designed as circular arc segments.

15. A device in accordance with any of the Claims 13 or 14, **characterised in that** the bridge segments (30, 30a) are provided with at least one radially outward extending limit stop (31) which serves to stop a movement of the corresponding bridge segment in a circumferential direction.

## Revendications

1. Dispositif de liaison de deux objets ronds présentant des diamètres extérieurs différents, en particulier de tuyaux (1, 2), comprenant un dispositif de couplage pontant le joint entre les faces frontales des objets ronds qui montrent l'une vers l'autre et ayant un manchon intérieur d'étanchéité (5) ainsi qu'un manchon de fixation (3) qui entoure ce dernier de l'extérieur et fixe les objets ronds dans leur position et qui se compose de plusieurs segments (7, 8) qui sont associés chacun à une portion circonférentielle et sont maintenus ensemble par un dispositif de serrage, ledit manchon de fixation (3) qui se compose de plusieurs segments (7, 8) et présente une pluralité d'interruptions circonférentielles (9, 10) pouvant être réglé de façon conique vers l'axe médian (a), lesdits segments (7, 8) du manchon de fixation (3) étant déplaçables radialement les uns contre les autres sur toute leur longueur et pouvant être réglés à angle égal les uns contre les autres par l'intermédiaire du dispositif de serrage, et ledit dispositif de serrage présentant au niveau de chaque interruption (9, 10) de la circonférence du manchon de fixation, sur la longueur du manchon, au moins deux organes de serrage (4) indépendants les uns des autres qui enjambent les interruptions circonférentielles (9, 10) associées et s'étendent en s'appliquant contre la face extérieure de la portion circonférentielle enjambée du manchon de fixation (3).

2. Dispositif selon la revendication 1, **caractérisé par le fait que** l'on prévoit deux segments (7, 8) associés chacun à une demi-circonférence pour former ledit manchon de fixation (3) à plusieurs parties.

3. Dispositif selon l'une quelconque des revendications précédentes, **caractérisé par le fait que** les segments (7, 8) du manchon de fixation (3) présentent, au moins au niveau d'une extrémité circonférentielle, une section transversale plane s'étendant dans le sens longitudinal.

4. Dispositif selon l'une quelconque des revendications précédentes, **caractérisé par le fait que** les organes de serrage (4) sont en prise de maintien réciproque avec leurs extrémités et/ou que les organes de serrage (4) s'étendent d'une zone de bord longitudinal à la zone de bord longitudinal opposée du même segment (7) et que tout autre segment (8) est embrassé par les organes de serrage (4).

5. Dispositif selon la revendication 4, **caractérisé par le fait que**, en état serré, la distance angulaire côté segment des points d'application côté segment des organes de serrage (4) est égale ou légèrement supérieure à 360° divisé par le nombre des segments existants, et/ou que, en état non serré, la distance angulaire côté segment des points d'application côté segment des organes de serrage (4) est inférieure ou tout au plus égale à un angle de 360° divisé par le nombre des segments existants (7, 8).

6. Dispositif selon l'une quelconque des revendications précédentes, **caractérisé par le fait que** les organes de serrage (4) s'appliquant sur au moins un segment (7) sont réalisés et/ou raccordés côté segment de manière à ce qu'ils puissent être déviés dans la direction axiale.

7. Dispositif selon la revendication 6, **caractérisé par le fait que** les organes de serrage (4) présentent des sangles (14, 17) reliées entre elles par un tendeur (13) qui peuvent être accrochées, par leurs extrémités opposées les unes aux autres, de préférence avec jeu dans la direction de pivotement par rapport à un axe radial, dans une fente d'accrochage (19) respectivement associée prévue côté segment, de préférence lesdites sangles (14, 17) étant réalisées en tant que rubans rectangulaires en coupe transversale et lesdites fentes d'accrochage (19) présentant une ouverture libre qui augmente depuis le milieu vers les extrémités latérales.

8. Dispositif selon l'une quelconque des revendications 4 à 7, **caractérisé par le fait que** les organes de serrage (4) enjambant chacun au moins une interruption circonférentielle (9, 10) du manchon de fixation (3) présentent chacun une partie élargie (23) associée à l'interruption enjambée.

9. Dispositif selon l'une quelconque des revendications 2 à 8, **caractérisé par le fait qu'**au moins un segment (7, 8), de préférence chaque segment (8) seulement embrassé par les organes de serrage (4), est verrouillé par rapport au manchon d'étanchéité (5) contre le fait de glisser dans la direction circonférentielle.

10. Dispositif selon l'une au moins des revendications précédentes, **caractérisé par le fait que** ledit manchon d'étanchéité (5) présente une section transversale apte à être refoulée dans la direction radiale, de préférence de type méandre.

11. Dispositif selon l'une quelconque des revendications précédentes, **caractérisé par le fait que** sur un segment (8) seulement embrassé par les organes de serrage (4) est réalisé un nombre de butées qui font saillie radialement vers l'extérieur et qui fixent au moins un organe de serrage (4) dans au moins une direction axiale.

12. Dispositif selon l'une quelconque des revendications précédentes, **caractérisé par le fait que** les segments (7, 8) du manchon de fixation (3) à plusieurs parties s'étendent, par leurs zones marginales latérales montrant les unes vers les autres, au-dessus ou bien au-dessous les uns des autres, les zones marginales latérales d'un segment (8) seulement embrassé par les organes de serrage (4) étant entourées pardessus par les zones marginales de l'autre segment (7) reliées entre elles par les organes de serrage (4).

13. Dispositif selon l'une quelconque des revendications 1 à 11, **caractérisé par le fait que** ledit manchon de fixation (3) présente au moins deux interruptions (9, 10) sur lesquelles respectivement deux segments (7, 8) délimitent une fente circonférentielle respective qui est recouverte d'un segment de pont (30, 30a) respectif qui s'étend au-dessous des segments (7, 8) délimitant la fente circonférentielle (9, 10).

14. Dispositif selon la revendication 13, **caractérisé par le fait que** lesdits segments de pont (30, 30a) sont non-profilés dans la direction longitudinale et dans la direction circonférentielle et présentent, de préférence sur au moins une portion s'étendant au-dessous d'un segment (7, 8), des arêtes situées en vis-à-vis dans la direction axiale et réalisées en forme de segment d'arc de cercle.

15. Dispositif selon l'une quelconque des revendications 13 ou 14, **caractérisé par le fait que** lesdits segments de pont (30, 30a) présentent au moins une butée (31) qui fait saillie radialement vers l'extérieur et qui limite un mouvement du segment de pont respectif dans la direction circonférentielle.
